# EUROPEAN PATENT SPECIFICATION

(11) **EP 3 626 932 B1**
(45) Date of publication and mention of the grant of the patent: **01.12.2021**
(21) Application number: 19198796.5
(22) Date of filing: 20.09.2019
(51) Int. Cl.: F01D 5/18, B22C 9/10, B22C 9/24

(54) **METHOD OF MANUFACTURING A COOLED COMPONENT FOR A GAS TURBINE ENGINE**
FERTIGUNGSVERFAHREN EINER GEKÜHLTEN KOMPONENTE FÜR EINEN GASTURBINENMOTOR
PROCÉDÉ DE FABRICATION DE COMPOSANT REFROIDI DE MOTEUR À TURBINE À GAZ

(30) Priority: 20.09.2018 US 201816136515
(43) Date of publication of application: 25.03.2020
(73) Proprietor: Raytheon Technologies Corporation, Farmington, CT 06032 (US)
(72) Inventor: HENEVELD, Benjamin, Arlington, MA Massachusetts 02474 (US)
(74) Representative: Dehns

(56) References cited:
- WO-A1-2013/163020
- US-B2- 8 678 751

## Description

### BACKGROUND

The subject matter disclosed herein generally relates to components of gas turbine engines and, more particularly, to a method and apparatus for manufacturing components of a gas turbine engine.

Investment casting may use a shell and a core to cast a metallic component however the shell and the core may shift relative to each other during the investment casting process due to thermal expansion and contractions. WO 2013/163020 A1 and US 8678751 B2 both disclose method of casting components for gas turbine engines.

### SUMMARY

According to embodiment first aspect, the present invention provides a method of manufacturing a component for a gas turbine engine according to claim 1.

The component may be a blade for the gas turbine engine.

The void may increase in thickness into the ceramic core by a third thickness.

The first thickness may be between 0.002-0.050 inches (0.0508-1.27mm).

The third thickness may be between 0.010 -0.100 inches (0.254-2.54mm).

The one or more flexures may follow at least one of a curve trajectory, a serpentine trajectory, a spiral trajectory, and a zig-zag trajectory.

The ceramic shell and ceramic core are a direct shell.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions are provided by way of example only and should not be considered limiting in any way. With reference to the accompanying drawings, like elements are numbered alike:
FIG. 1 is a partial cross-sectional illustration of a gas turbine engine;
FIG. 2 illustrates a cross-section of an investment casting mold, in accordance with an embodiment of the disclosure;
FIG. 2a illustrates a cross-section of blade of the gas turbine engine of FIG. 1, in accordance with an embodiment of the disclosure;
FIG. 3 illustrates an enlarged view of a cooling hole feature within the investment casting mold of FIG. 2, in accordance with an embodiment of the disclosure;
FIG. 4 illustrates an enlarged view of a cooling hole feature within the investment casting mold of FIG. 2, in accordance with an embodiment of the disclosure;
FIG. 5 illustrates an enlarged view of a cooling hole feature within the investment casting mold of FIG. 2, in accordance with an embodiment of the disclosure;
FIG. 6 illustrates an enlarged view of a cooling hole feature within the investment casting mold of FIG. 2, in accordance with an embodiment of the disclosure; and
FIG. 7 is a diagram of a method of manufacturing the blade of FIG. 2A using the investment casting model of FIG. 2, according to an embodiment of the present disclosure.

### DETAILED DESCRIPTION

A detailed description of one or more embodiments of the disclosed apparatus and method are presented herein by way of exemplification and not limitation with reference to the Figures.

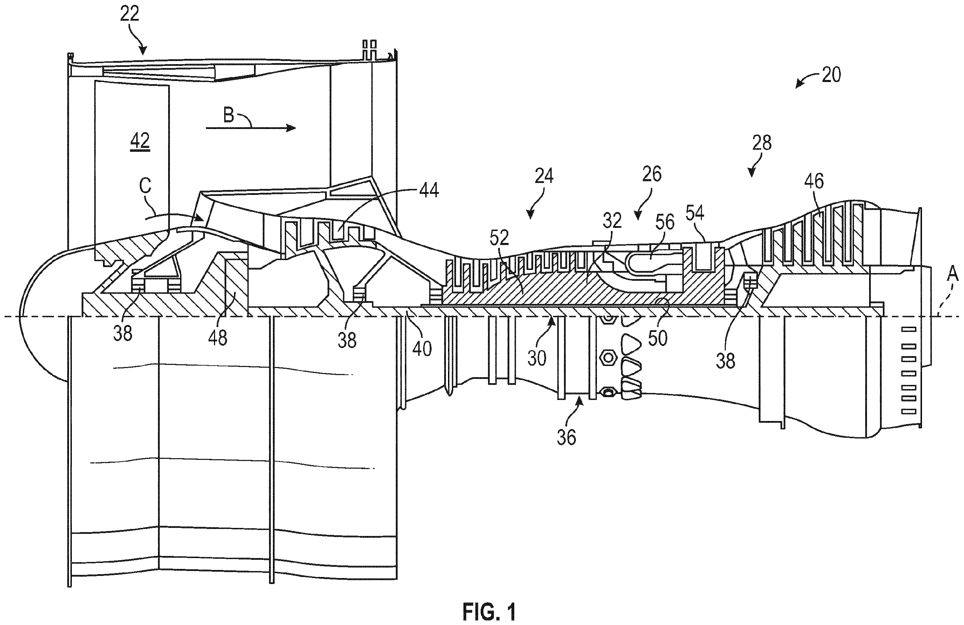

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

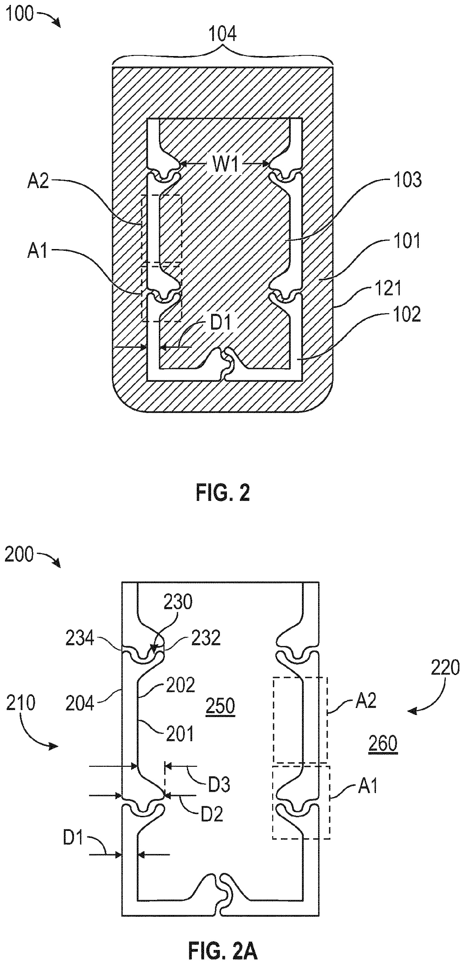

Referring now to FIGs. 2, 2a, and 3-6, with continued reference to FIG. 1, a cross-sectional view of an investment casting mold 100 is illustrated. The investment casting process may be formed by a casting method developed by Mikro Systems, Inc. of Charlottesville, VA as described in patent US 9,387,533 B1.

Investment casting can be used in numerous industries, such as in the aerospace and/or power industries to produce components for the gas turbine engine 20, such as, for example, blades having complex airfoil shapes and/or complex internal cooling passage geometries.

The production of a gas turbine blade using an investment casting process (e.g., a lost-wax casting process) can involve producing a ceramic casting vessel having an outer ceramic shell, which can correspond to the airfoil shape of the blade, and one or more ceramic cores positioned within the outer ceramic shell, those cores corresponding to interior cooling passages to be formed within the blade. Molten high temperature alloy can be introduced into the ceramic casting vessel using high-pressure injection and then can be allowed to cool and harden. The outer ceramic shell and ceramic core(s) then can be removed by mechanical and/or chemical means to reveal the cast blade, which can have an external airfoil shape that corresponds to the internal shape of the shell and/or can have hollow interior airfoil cooling passages in the shape of the exterior shape of the ceramic core(s).

The ceramic core(s) for this process can be manufactured by first precision machining the desired core shape into mating core mold halves formed of high strength hardened machine steel, then joining the mold halves to define an injection volume corresponding to the desired core shape, and vacuum injecting a ceramic mold material into the injection volume. The mold material can be a mixture of ceramic powder and binder material. Once the ceramic mold material has hardened to a green state, the mold halves can be separated to release the green state ceramic core. The fragile green state core then can be thermally processed to remove the binder and/or to sinter the ceramic powder together to develop the strength necessary for the core to survive further handling and subsequent use during the investment casting process.

The complete ceramic casting vessel can be formed by positioning the ceramic core within the two joined halves of another precision machined hardened steel mold (referred to as the wax mold or wax pattern tooling), which can define an injection volume that corresponds to the desired external or airfoil shape of the blade, and then vacuum injecting melted wax into the wax mold around the ceramic core. Once the wax has hardened, the wax mold halves can be separated and removed to reveal the wax pattern, which includes the ceramic core encased inside the wax, with the wax pattern outer surface now corresponding to the desired airfoil shape. The outer surface of the wax pattern then can be coated with a ceramic mold material, such as by a dipping process, to form the ceramic shell around the wax pattern. Upon hardening of the shell and removal of the wax by melting and/or other means, the completed ceramic casting vessel can be available to receive molten metal alloy in the investment casting process, as described above.

The investment casting mold 100 shown in FIG. 2 may be used to form a cast metal gas turbine engine component, as for example, a blade 200 for the compressor section 24 or the turbine section 28 of the gas turbine engine. While a blade 200 is used through for exemplary illustration it is understood that the embodiments disclosed herein may be applicable to other components of the gas turbine engine 20 are not limited to a blade 200.

The investment casting mold 100 shown in FIG. 2 is a negative of the blade 200 shown in FIG. 2a. FIG. 2 illustrates a cross-sectional view of the investment casting 200 and FIG. 2a illustrates a corresponding cross-sectional view of the blade 200 that may be produced using the investment casting mold 100 of FIG. 2. The blade 200 shown in FIG. 2a is intended to be general in scope with the left 210 and right side 220 corresponding to either the leading edge/trailing edge or the pressure/suction sides of an airfoil. Similarly, the left 210 and right side 220 can be visualized as the leading edge and trailing edge of the blade 200 or as the suction side and pressure side of the blade 200. The blade 200 includes an interior compartment 250 of the blade 200 and an exterior 260 of the blade 200. The blade 200 includes cooling holes 230 that fluidly connect the interior compartment 250 of the blade 200 to the exterior 260 of the blade 200. The blade 200 includes a wall 201 that encloses interior compartment 250 of the blade 200. The wall 201 includes an interior surface 202 defining the interior compartment 250 and an exterior surface 204 opposite the interior surface 202. The cooling holes 230 extend from an inlet 232 located on the interior surface 202 in the interior compartment 250 of the blade 200 to an outlet 234 located on the exterior surface 204 of the blade 200.

In conventional investment casting, a ceramic core 103 that will form the interior compartment 250 of a blade 200 can be surrounded by a wax pattern that can form the geometry of the blade 200. The wax can be melted and/or burned out to form a void 102 that can be filled with molten metal. Before the wax pattern is removed, it can be dipped multiple times in ceramic slurry to coat the pattern with a ceramic shell 101 that forms the exterior of the a blade 200.

Since the ceramic core 103 and ceramic shell 101 can be heated and cooled rapidly, the ceramic shell 101 and the ceramic core 103 can be at different temperatures and/or relative sizes to each other. Because of the different temperatures and/or potential changes in ceramic material properties at high temperatures, the ceramic core 103 can move relative to the ceramic shell 101 during the casting process ("core shift") and/or might need to be carefully attached to the ceramic shell 101 so that it does not touch the ceramic shell 101 and break. Because of core shift and/or the inability to support the ceramic core 103 along its length with respect to the ceramic shell 101 during metal casting, the outer wall thicknesses of cast metal parts can be difficult to precisely control, and/or very thin walls can be difficult to create with acceptable casting yields and tolerances. As thin walls can have desirable attributes in many applications, cooling hole features 105 can connect the ceramic core 103 to the ceramic shell 101 at multiple locations along the length of the ceramic core 103 to better control the cast wall thicknesses. Embodiment disclosed herein address "core shift" by creating the core 103 and shell 101 simultaneously with the same material system by using a fugitive 102, as described in patent US 9,387,533 B1. Furthermore, since the ceramic core 103 and ceramic shell 101 can be formed by different processes, they can entail different material properties, such as coefficient of thermal expansion (CTE). In an embodiment, both the core 103 and the shell 101 are composed of ceramic while the cooling hole feature 105 may be composed of either ceramic or a different material such as quartz, alumina, or a refractory metal. Materials with significantly different CTE's will grow and shrink at different rates even when an effort is made to keep them the same temperature by heating or cooling at relatively slower rates. This can cause stress and/or breakage at the interface between the parts with different CTE's and/or prohibit the connection of the ceramic core 103 and ceramic shell 101 at multiple locations. Therefore, certain embodiments can create the ceramic shell 101 and the ceramic core 103 out of the same material or materials with substantially similar CTE's. That is, the ceramic shell 101 and ceramic core 103 are formed as a monolithic, integrated, continuous, solid, and/or seamlessly combined part, which is called a "direct shell 104" herein. According to the invention, the ceramic shell 101 and ceramic core 103 are a direct shell 104.

The direct shell 104, which is comprised of a monolithic, integrated, continuous, solid, and/or seamlessly combined ceramic core 103 and ceramic shell 101, is cast using one or more fugitive molds (i.e., a mold formed from a material that will be destroyed (e.g., dissolved, shattered, melted, etc.) during removal). The fugitive mold pieces used to form the direct shell 104 can have cooling hole features 105 that are used to form cooling holes in the gas turbine component. These fugitive mold pieces are injected using TOMO flexible molds. TOMO refers to the Tomo Lithographic Molding (TLM) process developed by Mikro Systems, Inc. of Charlottesville, VA as described in patent US 9,387,533 B1.

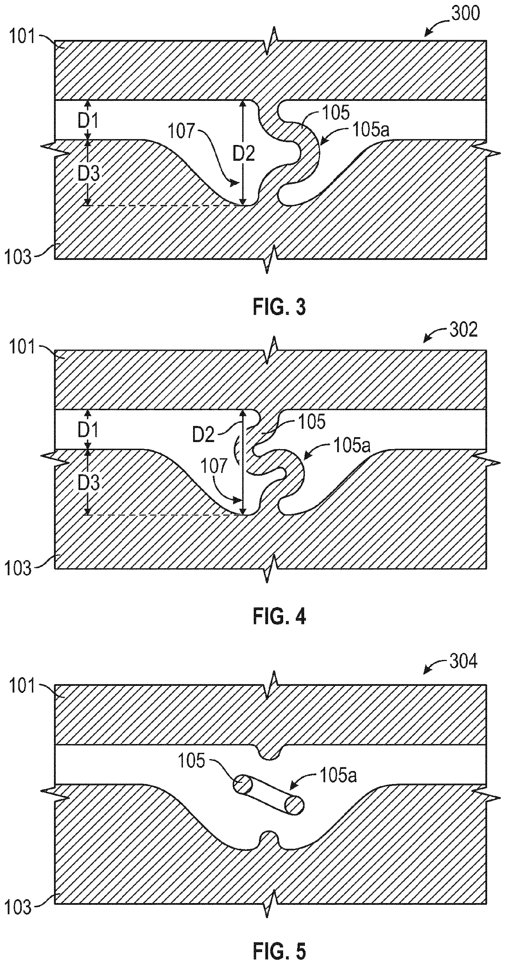

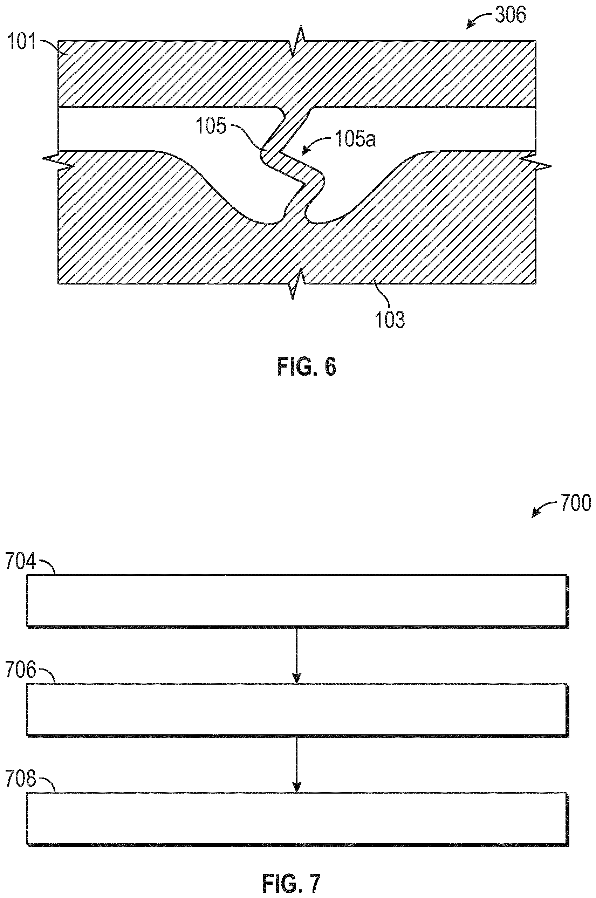

The cooling hole features 105 include one or more flexures 105a as shown in FIG. 3, 4, 5 and 6. The cooling hole features 105 may include one or more flexures 105a that follow at least one of a curve trajectory 300 as shown in FIG. 3, a serpentine trajectory 302 as shown in FIG. 4, a spiral trajectory 304 as shown in FIG. 5, and a zig-zag 306 trajectory as shown in FIG. 6. The cooling hole features 105 can have radii and/or chamfers on the inlets and/or exits as beneficial to control flow, increase the strength of the interface between the integral ceramic core 103 and ceramic shell 101, and/or reduce stress concentrations and related cracking on the cast metal parts and/or the direct shell 104. Curved cooling hole features 105 forming curved cooling holes in an airfoil might be especially valuable on the leading edge of an airfoil. These cooling hole features 105 can be positioned along the length of the investment casting mold 100 to connect and limit the relative movement of the sections of the direct shell 104 that form the interior and exterior surfaces of the a blade 200. These cooling hole features 105 can achieve better control over exterior wall thicknesses and/or create thinner walled parts. Such cooling hole features 105 can reduce or eliminate the need for expensive platinum pins that can be used to maintain the position the ceramic core 103 relative to the ceramic shell 101. Such cooling hole features 105 can reduce or eliminate the process of removing material from the cast component to form such holes.

Also, advantageously the increased thickness of area A1 relative to area A2 allows space for one or more flexure 105a in the connecting feature between the ceramic core 102 and the ceramic shell 101. The connecting feature entailing one or more flexure 105a is able to better survive relative movement between the ceramic core 102 and the ceramic shell 101 than a connecting feature that would fit in a thinner area A2. Further, the increased thickness of area A1 relative to area A2 may also allow for a longer gas path of the cooling hole 230 and provide more effective cooling around the cooling hole 230.

The ceramic shell 101 and core 103 may be positioned close together and separated by a void 102 having a first thickness D1. The void 102 in the investment casting mold 100 becomes the wall 201 in the blade 200 when the blade 200 is cast, Thus the wall will have a first thickness D1. The first thickness D1 may be between about 0.002-0.050 inches (0.0508-1.27mm). As shown in FIGs. 3 and 4, the void 102 may increase in thickness to a second thickness D2 proximate the cooling hole feature 105 by a third thickness D3 of between about 0.010-0.100 inches (0.254-2.54mm). The void 102 between the ceramic core 103 and the ceramic shell 101 may be increased by the third thickness D3 into the ceramic core 103, thus decreasing the width W1 of the ceramic core and creating a recess 107 in the ceramic core 103 proximate the cooling hole feature 105, as seen in FIG. 3 and 4. As shown in FIG. 2a, the wall 201 may increase in thickness to a second thickness D2 proximate the cooling hole 230 by a third thickness D3 of between about 0.010-0.100 inches (0.254-2.54mm). The wall 201 may increase in thickness into the interior compartment 250 by the third thickness D3.

As mentioned above, these cooling hole features 105 can achieve better control over wall thicknesses and/or create thinner walled components. Advantageously, these cooling hole features 105 allow the blade 200 wall 201 thickness D1 to be increased locally in an area A1 surrounding the cooling hole 230 and decreased in areas A2 away from the cooling hole 230. Advantageously, having thinner walls in areas such as area A2 allow the blade 200 wall 201 to be lighter while increasing the wall 201 thickness in areas A1 proximate cooling holes 230 to increase the surface area for cooling. In an embodiment, the wall 201 increases from a first thickness D1 to a second thickness D2 at the cooling hole 230. In another embodiment, the void 102 increases from a first thickness D1 to a second thickness D2 at the cooling hole feature 105.

The recess 107 of the investment casting mold 100 allows cooling holes to be cast in the blade 200 that extend a distance between the inlet 232 and exit 234 of the cooling hole 230 while still allowing for relatively thin walls 201 in the blade 200 than may be achievable with typical with a standard shell and core process. The extended distance between the inlet 232 and exit 234 of the cooling hole 230 allows for multiple flexures 105a or a single flexure 105a with a larger radius of curvature. This recess 107 and flexures 105a entailed in the cooling hole features 105 also extend the length of the flow trajectory within the cooling hole 230 thereby increasing the effective heat transfer for cooling this region. Furthermore, the raised inlet 232 may serve as an inertial separation feature that hinders particles from entering the cooling hole 230.

Advantageously, the cooling hole features 105 also help during the manufacturing process of the blade 200. The flexures 105a in the cooling hole features 105 in serve as flexible points in the investment casting mold 100 that absorb strain caused by differences in thermal expansion, contraction, or shrinkage during sintering, and/or metal casting between the ceramic core 103 and the ceramic shell 101.

Referring now to FIG. 7 with continued reference to FIGs. 1-4. Fig. 7 illustrates a method 700 manufacturing a component for a gas turbine engine 20. In an embodiment, the component is a blade 200 of the gas turbine engine 20. At block 704, melted metal is poured into an investment casting mold 100. As described above, the investment casting mold 100 comprises: a ceramic core 103 and a ceramic shell 101 outward from the ceramic core 103. As shown in FIG. 2, the ceramic shell 101 is separated from the ceramic core 103 by a void 102. The investment casting mold 100 also includes a cooling hole feature 105 (see FIGs 3 to 6) extending from the ceramic core 103 to the ceramic shell 101 through the void 102. The cooling hole feature 105 includes one or more flexures 105a. As shown above, the void 102 increases from a first thickness D1 to a second thickness D2 at the cooling hole feature 105. In an embodiment, the void 102 increases into the ceramic core 103 by a third thickness D3 (see FIG. 2A). At block 706, metal is allowed to solidify within the investment casting mold 100. At block 708, the investment casting mold 100 is removed from the metal.

While the above description has described the flow process of FIG. 7 in a particular order, it should be appreciated that unless otherwise specifically required in the attached claims that the ordering of the steps may be varied.

Technical effects of embodiments of the present disclosure interconnecting a ceramic core and a ceramic shell of an investment casting mold using one or more cooling hole features each having one or more flexures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of manufacturing a component (200) for a gas turbine engine (20), the method comprising:
forming at least one fugitive mold by a TOMO lithographic molding process,
casting an investment casting mold using the fugitive mold, wherein the investment casting mold comprises:
a ceramic core (103);
a ceramic shell (101) outward from the ceramic core, the ceramic shell being separated from the ceramic core by a void (102), the ceramic shell and ceramic core being a direct shell (104) which is a monolithic, integrated, continuous, solid, and/or seamlessly combined ceramic core and ceramic shell; and
a cooling hole feature (105) extending from the ceramic core to the ceramic shell through the void, the cooling hole feature including one or more flexures (105a), wherein the void increases from a first thickness (D1) to a second thickness (D2) at the cooling hole feature;
pouring melted metal into the investment casting mold,
allowing metal to solidify within the investment casting mold; and
removing the investment casting mold from the metal.

2. The method of claim 1, wherein the component (200) is a blade for the gas turbine engine.

3. The method of claim 1 or 2, wherein the void increases in thickness into the ceramic core by a third thickness (D3); optionally wherein the third thickness is between 0.010 -0.100 inches (0.254-2.54mm).

4. The method of claim 1, 2 or 3, wherein the first thickness is between 0.002-0.050 inches (0.0508-1.27mm).

5. The method of any of claims 1 to 4, wherein the one or more flexures follow at least one of a curve trajectory, a serpentine trajectory, a spiral trajectory, and a zig-zag trajectory.

## Patentansprüche

1. Fertigungsverfahren einer Komponente (200) für einen Gasturbinenmotor (20), wobei das Verfahren Folgendes umfasst:
Bilden mindestens einer flüchtigen Gießform durch einen lithografischen TOMO-Formgebungsprozess,
Gießen einer Präzisionsgießform unter Verwendung der flüchtigen Gießform, wobei die Präzisionsgießform Folgendes umfasst:
einen Keramikkern (103);
eine Keramikschale (101) außerhalb des Keramikkerns, wobei die Keramikschale durch einen Hohlraum (102) von dem Keramikkern getrennt ist, wobei die Keramikschale und der Keramikkern eine Direktschale (104) sind, bei der es sich um eine/n monolithische/n, integrierte/n, kontinuierliche/n, robuste/n und/oder nahtlos kombinierte/n Keramikkern und Keramikschale handelt; und
ein Kühllochmerkmal (105), das sich durch den Hohlraum von dem Keramikkern zu der Keramikschale erstreckt, wobei das Kühllochmerkmal eine oder mehrere Biegungen (105a) beinhaltet, wobei der Hohlraum von einer ersten Dicke (D1) zu einer zweiten Dicke (D2) an dem Kühllochmerkmal zunimmt;
Gießen von geschmolzenem Metall in die Präzisionsgießform, Verfestigenlassen von Metall innerhalb der Präzisionsgießform; und
Entfernen der Präzisionsgießform von dem Metall.

2. Verfahren nach Anspruch 1, wobei die Komponente (200) ein Blatt für den Gasturbinenmotor ist.

3. Verfahren nach Anspruch 1 oder 2, wobei die Dicke des Hohlraums in den Keramikkern durch eine dritte Dicke (D3) zunimmt; wobei die dritte Dicke gegebenenfalls zwischen 0,010-0,100 Zoll (0,254-2,54 mm) beträgt.

4. Verfahren nach Anspruch 1, 2 oder 3, wobei die erste Dicke zwischen 0,002-0,050 Zoll (0,0508-1,27 mm) beträgt.

5. Verfahren nach einem der Ansprüche 1 bis 4, wobei die eine oder mehreren Biegungen mindestens einem von einer gekrümmten Leitkurve, einer gewundenen Leitkurve, einer spiralförmigen Leitkurve und einer zickzackförmigen Leitkurve folgen.

## Revendications

1. Procédé de fabrication d'un composant (200) pour un moteur à turbine à gaz (20), le procédé comprenant :
la formation d'au moins un moule fugitif par un procédé de moulage tomo-lithographique,
le coulage d'un moule de coulée de précision en utilisant le moule fugitif, dans lequel le moule de coulée de précision comprend :
un noyau en céramique (103) ;
une coquille en céramique (101) située vers l'extérieur à partir du noyau en céramique, la coquille en céramique étant séparée du noyau en céramique par un vide (102), la coquille en céramique et le noyau en céramique étant une coquille directe (104) qui est un noyau en céramique et une coquille en céramique monolithiques, intégrés, continus, solides et/ou combinés sans soudure ; et
une caractéristique d'orifice de refroidissement (105) s'étendant du noyau en céramique à la coquille en céramique à travers le vide, la caractéristique d'orifice de refroidissement comportant une ou plusieurs flexions (105a), dans lequel le vide augmente d'une première épaisseur (D1) à une deuxième épaisseur (D2) au niveau de la caractéristique d'orifice de refroidissement ;
le versement du métal fondu dans le moule de coulée de précision,
le fait de permettre au métal de se solidifier dans le moule de coulée de précision ; et
le retrait du moule de coulée de précision du métal.

2. Procédé selon la revendication 1, dans lequel le composant (200) est une aube pour le moteur à turbine à gaz.

3. Procédé selon la revendication 1 ou 2, dans lequel le vide augmente d'épaisseur dans le noyau en céramique d'une troisième épaisseur (D3); éventuellement dans lequel la troisième épaisseur est comprise entre 0,010 et 0,100 pouce (0,254 à 2,54 mm) .

4. Procédé selon la revendication 1, 2 ou 3, dans lequel la première épaisseur est comprise entre 0,002 et 0,050 pouce (0,0508 à 1,27 mm).

5. Procédé selon l'une quelconque des revendications 1 à 4, dans lequel l'une ou plusieurs flexions suivent au moins une d'une trajectoire en courbe, d'une trajectoire en serpentin, d'une trajectoire en spirale et d'une trajectoire en zigzag.
